## Europäisches Patentamt

## European Patent Office

## Office européen des brevets

(19)

(11) Numéro de publication: **0 292 391 B1**

(12) **FASCICULE DE BREVET EUROPEEN**

(45) Date de publication du fascicule du brevet: **02.01.91**

(51) Int. Cl.⁵: **C 10 G 47/30,** C 10 G 15/12, B 01 J 12/00

(21) Numéro de dépôt: **88401215.4**

(22) Date de dépôt: **19.05.88**

(54) **Procédé d'hydrocraquage d'une charge d'hydrocarbures et installation d'hydrocraquage pour la mise en oeuvre de ce procédé.**

(30) Priorité: **22.05.87 FR 8707216**

(43) Date de publication de la demande:
**23.11.88 Bulletin 88/47**

(45) Mention de la délivrance du brevet:
**02.01.91 Bulletin 91/01**

(84) Etats contractants désignés:
**BE CH DE GB IT LI NL**

(56) Documents cités:
**CA-A-1 059 065**
**FR-A-2 542 004**
**US-A-3 033 779**
**US-A-3 891 562**

**CHEMICAL ABSTRACTS, vol. 78, no. 26, 2 juillet 1973, page 124, résumé no. 161783h, Columbus, Ohio, US; K. GEHRMANN et al.: "Pyrolysis of hydrocarbons using a hydrogen plasma"**

(73) Titulaire: **ELECTRICITE DE FRANCE Service National**
**2, rue Louis Murat**
**F-75008 Paris (FR)**

(72) Inventeur: **Amouroux, Jacques**
**136, rue de Villeziers**
**F-91440 Bures S/Yvette (FR)**
Inventeur: **Nikravech, Mehrdad**
**285, rue Saint-Jacques**
**F-75005 Paris (FR)**

(74) Mandataire: **Ahner, Francis et al**
**CABINET REGIMBEAU, 26, avenue Kléber**
**F-75116 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 292 391 B1

# EP 0 292 391 B1

**Description**

La présente invention est relative à un procédé d'hydrocraquage d'une charge d'hydrocarbures lourds et à une installation d'hydrocraquage pour la mise en oeuvre de ce procédé.

Le procédé connu d'hydrocraquage ou de craquage en présence d'hydrogène, consiste en une réaction catalysée de pyrolyse d'hydrocarbures à poids moléculaire élevé afin d'obtenir par rupture de liaisons carbone-carbone des hydrocarbures plus légers. Cette réaction est endothermique et a lieu dans une plage de températures bien déterminée. Au-dessus de cette plage de températures, les hydrocarbures sont dégradés par cokéfaction.

En présence d'hydrogène radicalaire, la vitesse de la réactieon de craquage augmente et la viscosité des produits diminue par raccourcissement des chaînes hydrocarbonées. De plus, la stabilité des produits et le rendement obtenu, sont supérieurs à ceux obtenus avec un procédé de craquage catalytique classique.

Toutefois, la production d'hydrogène radicalaire exige d'atteindre des températures élevées pour que sa concentration devienne significative et ses températures de formation de l'hydrogène radicalaire sont trop élevées pour permettre une réaction d'hydrocraquage dans la mesure où la cokéfaction aurait lieu.

La présente invention a donc pour but d'améliorer les rendements obtenus dans la technique antérieure en utilisant de l'hydrogène radicalaire pour l'hydrocraquage d'hydrocarbures lourds, tout en opérant à une température qui ne conduit pas à la cokéfaction de ces hydrocarbures.

A cet effet, la présente invention a pour objet un procédé d'hydrocraquage d'une charge d'hydrocarbures lourds caractérisé en ce qu'on mélange un plasma contenant de l'hydrogène dans un lit de particules solides fluidisé par un courant gazeux pour produire de l'hydrogène radicalaire entraîné dans le courant gazeux à une température inférieure à celle du plasma et en ce qu'on fait réagir l'hydrogène radicalaire refroidi ainsi produit avec ladite charge d'hydrocarbures lourds pour former par hydrocraquage, des hydrocarbures légers entraînés dans le courant gazeux.

Suivant d'autres caractéristiques de l'invention:

On fait circuler en aval du lit fluidisé, le courant gazeux à travers un réacteur dans lequel l'hydrogène radicalaire réagit avec les hydrocarbures lourds.

On fait séjourner le courant gazeux pendant un temps déterminé dans le réacteur afin d'ajuster le taux d'hydrocraquage et la longueur des fragments des hydrocarbures obtenus.

Les particules solides comprennent un catalyseur.

Le plasma contient de l'hydrogène.

Le plasma contient environ 80% en volume d'argon.

Le lit fluidisé est du type jaillissant.

On injecte le plasma latéralement dans le lit fluidisé.

Le courant gazeux de fluidisation contient de l'argon et/ou de l'hydrogène.

On injecte la charge d'hydrocarbures lourds dans le lit fluidisé.

On préchauffe le gaz de fluidisation en amont du lit fluidisé.

On préchauffe et on vaporise la charge d'hydrocarbures lourds avant son injection dans le courant gazeux.

Suivant une variante, on injecte la charge d'hydrocarbures lourds à la surface du lit fluidisé.

Suivant une autre variante, on injecte la charge d'hydrocarbures lourds dans le réacteur en aval du lit fluidisé.

La présente invention a également pour objet une installation d'hydrocraquage d'une charge d'hydrocarbures lourds pour la mise en oeuvre du procédé défini ci-dessus, caractérisé en ce qu'elle comprend un dispositif à lit fluidisé comprenant une enceinte comportant des moyens d'injection d'un gaz de fluidisation au niveau de son fond, des moyens de sortie de ce dernier et contenant une masse de particules solides destinées à former un lit fluidisé, et une torche à plasma d'un gaz contenant de l'hydrogène, adaptée pour injecter le plasma à l'intérieur de l'enceinte dans le lit de particules fluidisé.

Il est prévu un réacteur relié à la sortie de ladite enceinte, ce réacteur étant un réacteur tubulaire.

La torche à plasma est raccordée au niveau d'une paroi latérale de l'enceinte de façon à ce que le plasma soit injecté latéralement dans le lit fluidisé.

Les parois de l'enceinte sont en alumine.

Le fond de l'enceinte présente une forme évasée vers le haut à la partie inférieure duquel débouchent les moyens d'injection du gaz de fluidisation.

Les moyens d'injection du gaz de fluidisation comprennent un tube muni de moyens de chauffage et garni de particules solides d'un matériau d'échanges thermiques.

L'invention va être mieux comprise à la lumière de la description qui va suivre d'un mode de réalisation du procédé et de l'installation de l'invention, et faite en référence aux dessins annexés, sur lesquels:

La figure 1 est une vue schématique d'une installation d'hydrocraquage réalisée conformément à l'invention; et

Les figures 2 à 5 sont des histogrammes illustrant la répartition en pourcentage en poids en fonction du nombre de carbones des produits hydrocarbonés recueillis dans les phases gazeuse et liquide à la sortie de l'installation illustrée sur la figure 1 au cours de différents essais.

2

# EP 0 292 391 B1

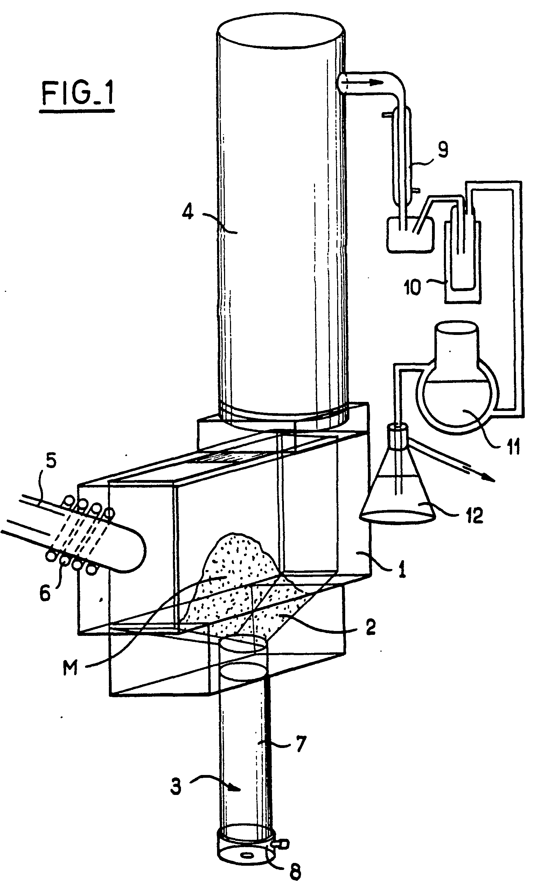

Sur la figure 1, l'installation comprend un dispositif à lit fluidisé comportant une enceinte 1 de forme générale parallélépipédique dont le fond 2 qui présente une forme évasée vers le haut est raccordé au niveau de sa partie inférieure à des moyens d'injection 3 d'un gaz de fluidisation.

Un réacteur tubulaire 4 est raccordé à la partie supérieure de l'enceinte 1 de telle façon que le réacteur 4 communique avec l'intérieur de l'enceinte et une torche à plasma 5 comportant de façon classique des inducteurs 6, traverse une paroi latérale de l'enceinte 1 de façon à injecter un plasma dans une masse M de particules disposée dans l'enceinte 1. Les particules de la masse M peuvent comprendre un catalyseur d'hydrocraquage classique et elles sont destinées à être fluidisées en un lit de type jaillissant par le gaz de fluidisation pénétrant dans l'enceinte.

L'enceinte 1 a des parois internes en alumine de 4 mm d'épaisseur, calorifugées extérieurement par une couche de briques poreuses de 20 mm d'épaisseur collées par du ciment réfractaire sur l'alumine, cette couche de briques étant elle-même recouverte par 14 mm d'épaisseur de laine de verre enveloppée d'une couche de rubans d'amiante.

Les moyens d'injection 3 du gaz de fluidisation comprennent un tube 7 en silice opaque d'une longueur de 300 mm et d'un diamètre de 40 mm débouchant au fond de l'enceinte 1. Ce tube est entouré d'un ruban chauffant de 500 W (non représenté) destiné à préchauffer le gaz de fluidisation et il est garni de billes d'alumine d'un diamètre de 2 à 6 mm favorisant les échanges thermiques entre le gaz et la paroi du tube. Les particules d'$Al_2O_3$ fluidisées ont une granulométrie telle que 43% en poids des billes ont un diamètre compris entre 500 et 350 µm et 57% en poids ont un diamètre compris entre 630 et 500 µm. Cette proportion granulométrique permet une fluidisation jaillissante sans entraîner de particules dans lenceinte 1 jusqu'à un débit du gaz de fluidisation de l'ordre de 50 l/mn. La partie inférieure du tube 7 est équipée d'un injecteur 8 classique en laiton.

Le réacteur tubulaire est constitué d'un tube de silice de 85 mm de diamètre et de 500 mm de longueur, un thermocouple (non représenté) étant prévu dans une partie intermédiaire de celui-ci pour mesurer la température du courant gazeux le traversant. La sortie du réacteur tubulaire 4 est reliée à des moyens de récupération et de fractionnement par condensation des produits hydrocarbonés sortants.

Ces moyens comprennent au voisinage de la sortie du réacteur tubulaire 4, un réfrigérant à eau 9 auquel est relié successivement un piège 10 à glace carbonique et un piège 11 à azote liquide. En aval, le piège à azote liquide 11 est relié à une fiole de lavage 12 dans laquelle une dépression est engendrée par une pompe non représentée.

En service, le fonctionnement de l'installation qui vient d'être décrite est le suivant. La masse M de particules solides, de diamètre déterminé, contenant un catalyseur sont mises en fluidisation en un lit jaillissant présentant la forme d'une fontaine retombant vers les parois de l'enceinte par le débit constant d'un gaz de fluidisation formé par un mélange d'argon et/ou d'hydrogène et de l'hydrocarbure vaporisé. Le gaz de fluidisation est préchauffé dans le tube 7 garni des billes d'alumine, la charge d'hydrocarbures lourds aliphatiques et/ou cycliques, étant introduite dans le lit fluidisé par l'intermédiaire d'une canne d'injection dans laquelle il est vaporisé et préchauffé.

La torche à plasma 5 injecte un plasma d'hydrogène contenant de préférence de l'argon, latéralement dans le lit de particules fluidisé où il transfère en se mélangeant et en se refroidissant une partie de sa chaleur aux particules qui échangent cette chaleur avec le gaz de fluidisation et la charge d'hydrocarbures louds permettant ainsi une réaction d'hydrocraquage en présence d'hydrogène radicalaire à une température ajustée qui demeure notablement inférieure à celle du plasma et qui ne donne donc pas lieu à la cokéfaction des hydrocarbures.

La réaction d'hydrocraquage se poursuit en présence de l'hydrogène radicalaire dans le réacteur tubulaire 4 et le temps de séjour du courant gaz à l'intérieur de celui-ci, est déterminé de façon à ajuster le taux d'hydrocraquage des hydrocarbures lourds ainsi que la longueur des fragments d'hydrocarbures légers obtenus.

Les produits hydrocarbonés sortant du réacteur tubulaire 4 sont ensuite fractionnés en fonction de leur point de condensation dans le réfrigérant à eau 9, dans le piège à glace carbonique 10 (−60°C) et dans le piège à azote liquide 11 (−196°C) pour les produits les plus légers.

La torche à plasma fonctionne à une fréquence de 5 MHz avec une puissance allant jusqu'à 9 kW et un rendement de 50%. Le débit de gaz plasmagène est par exemple de 42 à 47 litres/mn avec de 35 à 40 litres/ mn d'argon et 7 litres/mn d'hydrogène. Les plasmas d'hydrogène demandant une énergie plus importante que les plasmas d'argon, on augmente la tension aux bornes de l'inducteur 6 au fur et à mesure que l'on accroît le débit d'hydrogène dans le gas plasmagène.

L'utilisation de l'argon dans le gaz plasmagène présente un intérêt particulier dans la mesure où l'on génère l'espèce radicalaire $ArH^+$. Dont la durée de vie est estimée à quelques secondes, ce qui permet d'augmenter la durée de vie de l'hydrogène radicalaire.

L'injection d'un plasma à base d'hydrogène dans le lit de particules fluidisé en présence de la charge vaporisée d'hydrocarbures louds permet ainsi d'assurer un échange thermique rapide entre le courant gazeux de fluidisation et le plasma et de disposer ainsi d'une quantité importante d'hydrogène radicalaire à une température commandée satisfaisante pour effectuer la réaction d'hydrocraquage.

Les exemples suivants illustrent la mise en oeuvre du procédé de l'invention.

Dans ces exemples, on a traité un hydrocarbure aliphatique en $C_{20}$ pour effectuer la réaction d'hydrocraquage et on a analysé les hydrocarbures sortants par chromatographie à l'aide d'un détecteur à

3

ionisation de flamme équipé d'une colonne SE30 à 10% pour la séparation des hydrocarbures liquides et d'une colonne de squalane à 7% pour la séparation des hydrocarbures gazeux et légers.

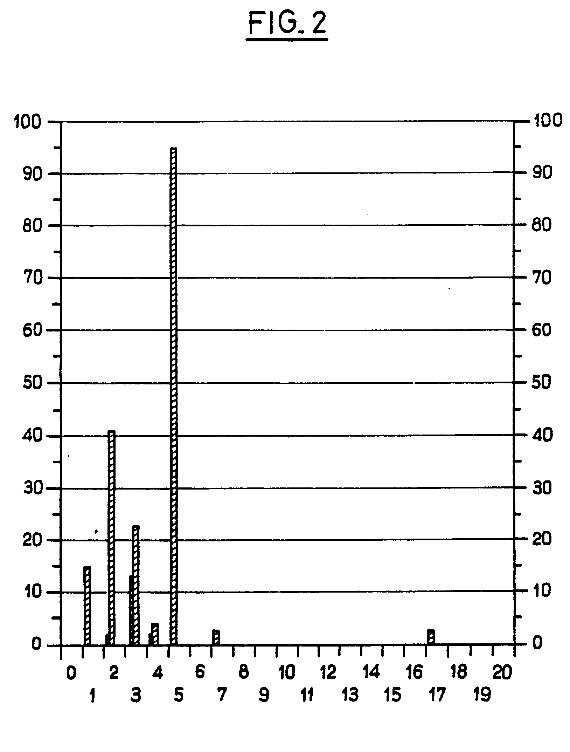

Les chromatogrammes qui ont été obtenus sont présentés sous la forme d'histogrammes sur les figures 2 à 5.

Les résultats sont mentionnés dans les tableaux 1 et 2 ci-dessous.

TABLEAU 1

| | Temp. moy. dans le réacteur °C | Gas de fluidisation | | Gas plasmogène | | Catalyseur | Hydrocarbure lourd ($C_{20}$ ali- phasaturé) (ml/min) |
| | | H2 l/mm | Ar l/mm | H2 l/mm | Ar l/mm | | |
|---|---|---|---|---|---|---|---|
| Ex. 1, fig. 2 | 700—750 | — | 29 | 7 | 31 | $Al_2O_3$ | 5 |
| Ex. 2, fig. 3 | 600—700 | — | 30 | 4,5 | 28 | $Al_2O_3$ | 5 |
| Ex. 3, fig. 4 | 450—500 | — | 29 | 6 | 31 | $Al_2O_3$ | 5 |
| Ex. 4, fig. 5 | 470 | 50 | 20 | 2 | 25 | $Al_2O_3$ | 5 |

Quatre vingt dix pourcent en poids des produits obtenus au cours des expériences mentionnées sont à l'état gazeux renfermant de 1 à 4 atomes de carbone.

Les hydrocarbures constitués de 5 à 20 atomes de carbone formant dix pourcent des produits sont à l'état liquide.

L'analyse séparée de ces deux types de produits donne les résultats suivants:

Ex. 1, Fig. 2

| | saturés | oléfiniques | dièniques |
|---|---|---|---|
| Pourcentage en poids d'hydrocarbures obtenus dans la phase gazeuse | $CH_4$ 15% $C_2H_6$ 2% $C_4H_{10}$ 2% | $C_2H_4$ 41% $C_3H_6$ 13% $C_4H_8$ 4% | $C_3H_4$ 23% |
| Pourcentage en poids d'hydrocarbures obtenus dans la phase liquide | $C_5$ 95% $C_8$ 2,5% $C_{17}$ 2,5% | | |

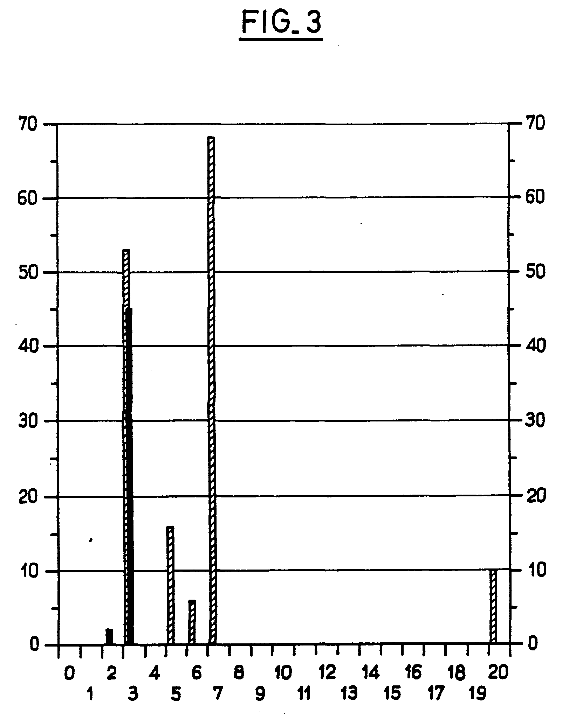

Ex. 2, Fig. 3

| | saturés | oléfiniques | dièniques |
|---|---|---|---|
| Pourcentage en poids d'hydrocarbures obtenus dans la phase gazeuse | $C_3H_8$ 53% | $C_2H_4$ 2% $C_3H_6$ 45% | |
| Pourcentage en poids d'hydrocarbures obtenus dans la phase liquide | $C_5$ 16% $C_6$ 6% $C_7$ 68% $C_{20}$ 10% | | |

# EP 0 292 391 B1

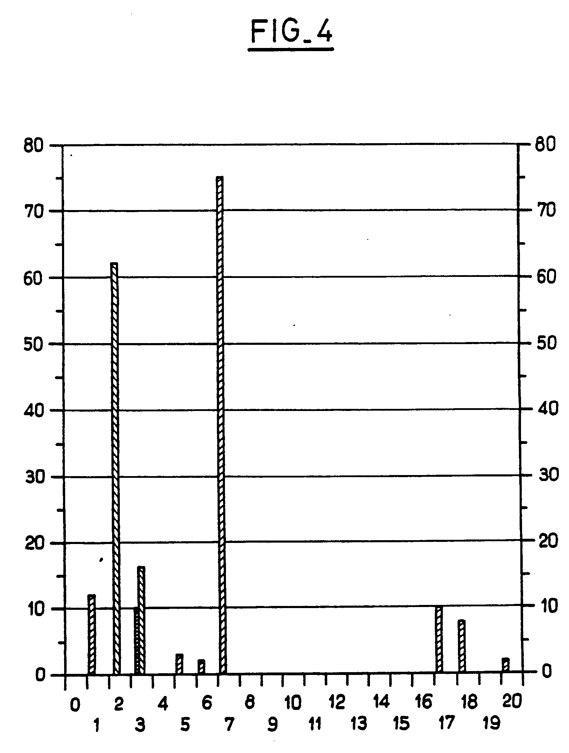

**Ex. 3, Fig. 4**

| | saturés | oléfiniques | diéniques |
|---|---|---|---|
| Pourcentage en poids d'hydrocarbures obtenus dans la phase gazeuse | $CH_4$ 12% | $C_2H_4$ 62%<br>$C_3H_6$ 10% | $C_3H_4$ 16% |
| Pourcentage en poids d'hydrocarbures obtenus dans la phase liquide | $C_5$ 3%<br>$C_6$ 2%<br>$C_7$ 75%<br>$C_{17}$ 10%<br>$C_{18}$ 8%<br>$C_{20}$ 2% | | |

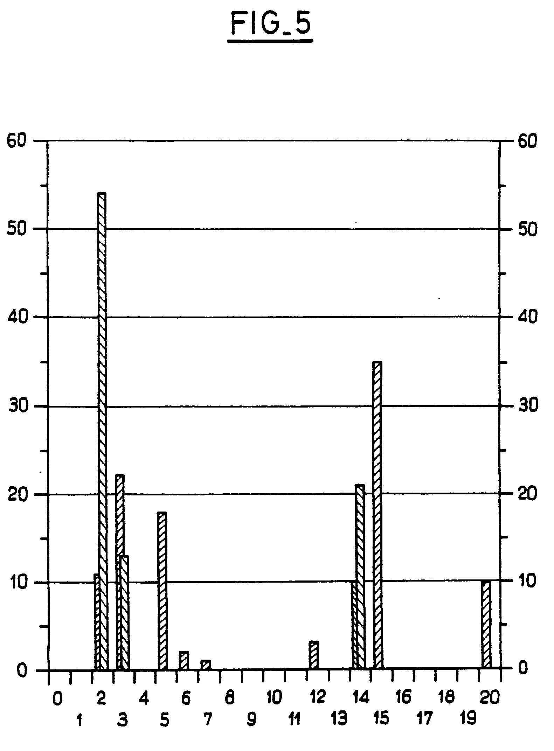

**Ex. 4, Fig. 5**

| | saturés | oléfiniques | diéniques |
|---|---|---|---|
| Pourcentage en poids d'hydrocarbures obtenus dans la phase gazeuse | $C_2H_6$ 11% | $C_2H_4$ 54%<br>$C_3H_6$ 22% | $C_3H_4$ 13% |
| Pourcentage en poids d'hydrocarbures obtenus dans la phase liquide | $C_5$ 18%<br>$C_6$ 2%<br>$C_7$ 1%<br>$C_{12}$ 3%<br>$C_{14}$ 10%<br>$C_{15}$ 35%<br>$C_{20}$ 10% | $C_{15}$ 21% | |

## Revendications

1. Procédé d'hydrocraquage d'une charge d'hydrocarbures lourds, caractérisé en ce qu'on mélange un plasma contenant de l'hydrogène dans un lit de particules solides fluidisé par un courant gazeux pour produire de l'hydrogène radicalaire entraîné dans le courant gazeux à une température inférieure à celle du plasma et en ce qu'on fait réagir l'hydrogène radicalaire refroidi ainsi produit avec ladite charge d'hydrocarbures lourds pour former par hydrocraquage, des hydrocarbures légers entraînés dans le courant gazeux.

2. Procédé suivant la revendication 1, caractérisé en ce qu'on fait circuler en aval du lit fluidisé, le courant gazeux à travers un réacteur dans lequel l'hydrogène radicalaire réagit avec les hydrocarbures lourds.

3. Procédé suivant la revendication 2, caractérisé en ce qu'on fait séjourner le courant gazeux pendant un temps déterminé dans le réacteur afin d'ajuster le taux d'hydrocraquage et la longueur des fragments des hydrocarbures obtenus.

4. Procédé suivant l'une quelconque des revendications précédentes, caractérisé en ce que les particules solides comprennent un catalyseur.

5. Procédé suivant l'une quelconque des revendications précédentes, caractérisé en ce que le plasma contient de l'hydrogène.

6. Procédé suivant la revendication 5, caractérisé en ce que le plasma contient environ 80% en volume d'argon.

7. Procédé suivant l'une quelconque des revendications précédentes, caractérisé en ce que le lit fluidisé est du type jaillissant.

8. Procédé suivant l'une quelconque des revendications précédentes, caractérisé en ce qu'on injecte le plasma latéralement ou perpendiculairement dans le lit fluidisé.

9. Procédé suivant l'une quelconque des revendications précédentes, caractérisé en ce que le courant gazeux de fluidisation, contient de l'argon et/ou de l'hydrogène.

10. Procédé suivant l'une quelconque des revendications précédentes, caractérisé en ce qu'on injecte la charge d'hydrocarbures lourds dans le lit fluidisé.

11. Procédé suivant l'une quelconque des revendications 1 à 9, caractérisé en ce qu'on injecte la charge d'hydrocarbures lourds à la surface de lit fluidisé.

12. Procédé suivant l'une quelconque des revendications 2 à 9, caractérisé en ce qu'on injecte la charge d'hydrocarbures lourds dans le réacteur en aval du lit fluidisé.

13. Procédé suivant l'une quelconque des revendications précédentes, caractérisé en ce qu'on préchauffe le gaz de fluidisation en amont du lit fluidisé.

14. Procédé suivant l'une quelconque des revendications précédentes, caractérisé en ce qu'on préchauffe et en ce qu'on vaporise la charge d'hydrocarbures lourds avant son injection dans le courant gazeux.

15. Installation d'hydrocraquage d'une charge d'hydrocarbures lourds pour la mise en oeuvre du procédé suivant l'une quelconque des revendications précédentes, caractérisée en ce qu'elle comprend un dispositif à lit fluidisé comprenant une enceinte (1) comportant des moyens d'injection (3) d'un gaz de fluidisation au niveau de son fond, des moyens de sortie de ce dernier et contenant une masse (M) de particules solides destinées à former un lit fluidisé; et une torche à plasma (5) d'un gaz contenant de l'hydrogène, adaptée pour injecter le plasma à l'intérieur de l'enceinte dans le lit de particules fluidisé.

16. Installation suivant la revendication 15, caractérisée en ce qu'il est prévu un réacteur (4) relié à la sortie de ladite enceinte.

17. Installation suivant la revendication 16, caractérisée en ce que ledit réacteur est un réacteur tubulaire.

18. Installation suivant l'une quelconque des revendications 15 à 17, caractérisée en ce que la torche à plasma est raccordée au niveau d'une paroi latérale de l'enceinte de façon à ce que le plasma soit injecté latéralement dans le lit fluidisé.

19. Installation suivant l'une quelconque des revendications 15 à 18, caractérisée en ce que les parois de l'enceinte sont en alumine.

20. Installation suivant l'une quelconque des revendications 15 à 19, caractérisée en ce que le fond (2) de l'enceinte présente une forme évasée vers le haut à la partie inférieure duquel débouchent les moyens d'injection (7) du gaz de fluidisation.

**Patentansprüche**

1. Hydrocrackverfahren für eine Charge schwerer Kohlenwasserstoffe, dadurch gekennzeichnet, daß ein wasserstoffhaltiges Plasma in einem durch einen Gasstrom aufgewirbelten Bett aus festen Teilchen durchmischt wird, um in dem Gasstrom eingeschlossene Wasserstoffradikale einer Temperatur unterhalb derjenigen des Plasmas zu bilden, und daß die so gewonnenen abgekühlten Wasserstoffradikale mit der Charge schwerer Kohlenwasserstoffe reagieren gelassen werden, um durch die Hydrocrackung leichte, in dem Gasstrom eingeschlossene Kohlenwasserstoffe zu gewinnen.

2. Verfahren nach Anspruch 1, dadurch gekennzeichnet, daß der Gasstrom durch einen dem Wirbelbett nachgeordneten Reaktor zirkuliert, in dem die Wasserstoffradikale mit den schweren Kohlenwasserstoffen reagieren.

3. Verfahren nach Anspruch 2, dadurch gekennzeichnet, daß der Gasstrom für eine vorbestimmte Zeitdauer in dem Reaktor verweilt, um so den Grad der Hydrocrackung und die Länge der erhaltenen Kohlenwasserstoffketten bestimmen zu können.

4. Verfahren nach einem der vorhergehenden Ansprüche, dadurch gekennzeichnet, daß die festen Teilchen einen Katalysator enthalten.

5. Verfahren nach einem der vorhergehenden Ansprüche, dadurch gekennzeichnet, daß das Plasma Wasserstoff enthält.

6. Verfahren nach Anspruch 5, dadurch gekennzeichnet, daß das Plasma etwa 80 Volumen-% Argon enthält.

7. Verfahren nach einem der vorhergehenden Ansprüche, dadurch gekennzeichnet, daß das Wirbelbett vom Typ eines Sprudelbettes ist.

8. Verfahren nach einem der vorhergehenden Ansprüche, dadurch gekennzeichnet, daß das Plasma seitlich oder senkrecht in das Wirbelbett gespritzt wird.

9. Verfahren nach einem der vorhergehenden Ansprüche, dadurch gekennzeichnet, daß der Verflüssigungsgasstrom Argon und/oder Wasserstoff enthält.

10. Verfahren nach einem der vorhergehenden Ansprüche, dadurch gekennzeichnet, daß die Charge schwerer Kohlenwasserstoffe in das Wirbelbett hineingespritzt wird.

11. Verfahren nach einem der Ansprüche 1 bis 9, dadurch gekennzeichnet, daß die Charge schwerer Kohlenwasserstoffe auf die Oberfläche des Wirbelbettes aufgespritzt wird.

12. Verfahren nach einem der Ansprüche 2 bis 9, dadurch gekennzeichnet, daß die Charge schwerer Kohlenwasserstoffe vor dem Wirbelbett in den Reaktor gespritzt wird.

13. Verfahren nach einem der vorhergehenden Ansprüche, dadurch gekennzeichnet, daß der Gasstrom vor dem Wirbelbett vorgeheizt wird.

14. Verfahren nach einem der vorhergehenden Ansprüche, dadurch gekennzeichnet, daß die Charge schwerer Kohlenwasserstoffe vor dem Einspritzen in den Gasstrom vorgeheizt und zerstäubt wird.

15. Vorrichtung zur Ausführung des Verfahrens zum Hydrocracken einer Charge schwerer Kohlenwasserstoffe nach einem der vorhergehenden Ansprüche, dadurch gekennzeichnet, daß sie ein Wirbelbett aufweist, das ein Gefäß (1) aufweist, das Einspritzmittel (3) für ein Verflüssigungsgas in Höhe seines Bodens, sowie Auslaßmittel an seinem Ende und eine aus festen Teilchen bestehende Masse (M) aufweist, die dazu dienen, ein Wirbelbett zu bilden; und daß sie einen Plasmabrenner (5) für ein

EP 0 292 391 B1

Wasserstoff enthaltendes Gas aufweist, der dazu eingerichtet ist, das Plasma in das Innere des Gefäßes in das Bett der verflüssigten Teilchen einzuspritzen.

16. Vorrichtung nach Anspruch 15, dadurch gekennzeichnet, daß ein Reaktor (4) vorgesehen ist, der am Ausgang des Gefäßes angeschlossen ist.

17. Vorrichtung nach Anspruch 16, dadurch gekennzeichnet, daß der Reaktor ein röhrenförmiger Reaktor ist.

18. Vorrichtung nach einem der Ansprüche 15 bis 17, dadurch gekennzeichnet, daß der Plasmabrenner in der Höhe einer seitlichen Wand des Gefäßes derart angeordnet ist, daß das Plasma seitlich in das Wirbelbett einspritzbar ist.

19. Vorrichtung nach einem der Ansprüche 15 bis 18, dadurch gekennzeichnet, daß die Wände des Gefäßes aus Aluminium gebildet sind.

20. Vorrichtung nach einem der Ansprüche 15 bis 19, dadurch gekennzeichnet, daß der Boden (2) des Gefäßes eine sich nach oben erweiternde Gestalt aufweist, in dessen unterem Bereich die Einspritzmittel (7) für das Verflüssigungsgas münden.

**Claims**

1. A process for the hydrocracking of a feedstock of high-molecular hydrocarbons, which comprises mixing a plasma containing hydrogen into a bed of solid particles fluidized by a stream of gas in order to produce radical hydrogen entrained in the stream of gas at a temperature below that of the plasma, and reacting the cooled radical hydrogen produced in this way with the said feedstock of high-molecular hydrocarbons in order to form, by hydrocracking, low-molecular hydrocarbons entrained in the stream of gas.

2. The process according to Claim 1, wherein the stream of gas is circulated, downstream of the fluidized bed, through a reactor in which the radical hydrogen reacts with the high-molecular hydrocarbons.

3. The process according to Claim 2, wherein the stream of gas is made to reside in the reactor for a given period of time for the purpose of adjusting the hydrocracking coefficient and the length of the hydrocarbon fragments obtained.

4. The process according to any one of the preceding claims, wherein the solid particles include a catalyst.

5. The process according to any one of the preceding claims, wherein the plasma contains hydrogen.

6. The process according to Claim 5, wherein the plasma contains about 80% by volume of argon.

7. The process according to any one of the preceding claims, wherein the fluidized bed is of the spurting type.

8. The process according to any one of the preceding claims, wherein the plasma is injected laterally or perpendicularly into the fluidized bed.

9. The process according to any one of the preceding claims, wherein the stream of fluidizing gas contains argon and/or hydrogen.

10. The process according to any one of the preceding claims, wherein the feedstock of high-molecular hydrocarbons is injected into the fluidized bed.

11. The process according to any one of Claims 1 to 9, wherein the feedstock of high-molecular hydrocarbons is injected at the surface of the fluidized bed.

12. The process according to any one of Claims 2 to 9, wherein the feedstock of high-molecular hydrocarbons is injected into the reactor downstream of the fluidized bed.

13. The process according to any one of the preceding claims, wherein the fluidizing gas is preheated upstream of the fluidized bed.

14. The process according to any one of the preceding claims, wherein the feedstock of high-molecular hydrocarbons is preheated and vaporized before being injected into the stream of gas.

15. A plant for the hydrocracking of a feedstock of high-molecular hydrocarbons, for carrying out the process according to any one of the preceding Claims, which comprises a fluidized-bed device including a chamber (1) possessing means (3) for injecting a fluidizing gas at its bottom end, means for the said fluidizing gas to escape, which contain a mass (M) of solid particles for forming a fluidized bed, and a plasma torch (5) of a gas containing hydrogen, which is suitable for injecting the plasma inside the chamber into the fluidized bed of particles.

16. The plant according to Claim 15, wherein a reactor (4) is provided and is connected to the outlet of the said chamber.

17. The plant according to Claim 16, wherein the said reactor is a tube reactor.

18. The plant according to any one of Claims 15 to 17, wherein the plasma torch is connected to a side wall of the chamber so that the plasma is injected laterally into the fluidized bed.

19. The plant according to any one of Claims 15 to 18, wherein the walls of the chamber are made of alumina.

20. The plant according to any one of Claims 15 to 19, wherein the bottom (2) of the chamber has a flared shape towards the top and the means (7) for injecting the fluidizing gas come out into the lower part of said bottom.

7

EP 0 292 391 B1

FIG.1

1

# FIG. 2

# FIG. 3

# FIG_4

# FIG_5